# EUROPÄISCHE PATENTANMELDUNG

(11) **EP 0 709 606 A2**
(43) Veröffentlichungstag der Anmeldung: **01.05.1996**
(21) Anmeldenummer: 95250255.7
(22) Anmeldetag: 20.10.1995
(51) Int. Cl.: F16K 31/06

(54) **Elektromagnetisch gesteuertes Wegesitzventil**

(30) Priorität: 25.10.1994 DE 4439495
(71) Anmelder: MANNESMANN Aktiengesellschaft, D-40213 Düsseldorf (DE)
(72) Erfinder: Müller, Heinrich, D-55131 Mainz (DE)
(74) Vertreter: Presting, Hans-Joachim, Dipl.-Ing.

(57) **Zusammenfassung**

Die Erfindung betrifft ein elektromagnetisch gesteuertes Wegesitzventil bestehend aus einem Ventilgehäuse, das Aanschlüsse für das Druckmittel und einen Ventilsitz aufweist und ein mit dem Ventilgehäuse verbundenes Magnetgehäuse mit Spulenwicklung und einem axial verschiebbaren hülsenartig ausgebildeten Anker sowie einem mit dem Ventilsitz zusammenwirkenden Verschließorgan, wobei das dem Ventilsitz zugewandte Ende des Ankers einen einwärts gerichteten Bund zur Mitnahme des Verschließorganes aufweist und das Verschließorgan durch die Kraft einer Druckfeder in Schließstellung und durch die auf den Anker wirkende Magnetkraft in Offenstellung gehalten wird.
Um ein elektromagnetisch gesteuertes Wegeventil, insbesondere ein 2/2-Wegesitzventil mit kurzer Ansprechzeit anzugeben, das bei kleinem Bauraum als Einbauventil geeignet ist und auch bei Fertigungsgenauigkeiten des Sitzbereiches und auftretenden Massenkräften keine Beeinträchtigung der Gasdichtheit bis ≧ 80 bar oder der Funktionssicherheit noch der Lebensdauer aufweist, wird erfindungsgemäß vorgeschlagen, daß das Verschließorgan (11) als loses Plättchen ausgebildet ist, das von einer mit der Feder (13) zusammenwirkende Kugel (12) in Schließrichtung zentral belastbar ist und auf das zur Schaltung in Schließstellung die Druckfeder (13) unmittelbar einwirkt, wobei beim Schließvorgang der Anker (8) durch das Verschlußorgan (11) mitgenommen wird und in der Schließstellung des Verschlußorganes (11) der einwärts gerichtete Bund (8a) des Ankers (8) in Öffnungsrichtung Spiel zum Verschließorgan (11) aufweist.

## Beschreibung

Die Erfindung betrifft ein elektromagnetisch gesteuertes Wegesitzventil gemäß dem Gattungsbegriff des Hauptanspruches.
Ein elektromagnetisch gesteuertes Wegesitzventil der gattungsmäßigen Art ist aus der DE 3627543 C2 bekannt, wobei die gattungsmäßige Übereinstimmung sich nur auf das Hilfsventil bezieht. Dieses Hilfsventil besteht aus einem Ventilgehäuse, das Anschlüsse für das Druckmittel und einen Ventilsitz aufweist. Mit dem Ventilgehäuse verbunden ist ein Magnetgehäuse mit Spulenwicklung und einem axial verschiebbaren hülsenartig ausgebildeten Anker sowie einem mit dem Ventilsitz zusammenwirkenden Verschließorgan. Auf dem dem Ventilsitz zugewandten Ende des Ankers weist dieser einen einwärts gerichteten Bund zur Mitnahme des Verschließorganes auf. Das Verschließorgan wird indirekt durch die Kraft einer in einer Ausnehmung des Ankers angeordneten Druckfeder in Schließstellung und durch die auf den Anker wirkende Magnetkraft entgegen einer den Hauptventilsitz schließenden Feder in Offenstellung gehalten. Nachteilig bei dieser Konstruktion ist, daß bedingt durch die langen Hubwege die Ansprechzeiten sehr lang sind und die erforderlichen Magnetkräfte sehr groß sein müssen, so daß der elektromagnetische Teil entsprechend groß ausfällt.

Ein weiteres elektromagnetisch gesteuertes Wegesitzventil ist aus der DE 33 38 418 C2 bekannt. Dieses besteht aus einem Ventilgehäuse, das mit Anschlüssen für das Druckmittel und mit einem Ventilsitz versehen ist. Mit dem Ventilgehäuse fest verbunden ist ein Magnetgehäuse mit einer Spulenwicklung und einem darin axial verschiebbaren Ventilglied. Das Ventilglied besteht aus einem den Anker bildendes Hüllrohr aus magnetempfindlichen Material und einem von dem Hüllrohr umschlossenen Dichtkörper, der das Verschließorgan bildet und mit dem Ventilsitz zusammenwirkt. Dabei wird das Verschließorgan durch die Kraft einer Druckfeder, deren dem Ventilsitz zugewandtes Ende sich auf einem auswärts gerichteten Bund des Hüllrohres abstützt, in Schließstellung und durch die auf den Anker wirkende Magnetkraft in Offenstellung gehalten. Bei einer wie auch hier üblichen plattenförmigen Ausbildung des Verschließorganes weist der Ventilsitz eine scharfkantige Sitzgeometrie auf. Damit die Dichtheit gewährleistet ist, muß die Schließkraft so groß gewählt werden, daß der Ventilsitz sich dabei elastisch verformt. Bei dieser elastischen Verformung des scharfkantigen Sitzes kann nur dann eine Dichtheit erreicht werden, wenn fertigungsbedingte Winkelabweichungen durch eine Schrägstellung des Ankers eliminiert werden. Das hat aber unter anderem aufgrund der gewünschten Schiefstellung des Ankers Verluste in der Magnetkraft zur Folge. Neben der beschriebenen Anforderung an den Sitz existieren natürlich auch entsprechende Anforderungen an den Sitzkörper und das Verschließorgan, Forderungen, die zumindest ein Läppen als Oberflächenbearbeitung voraussetzen. Außerdem wirken während des Schließvorgangs die dynamischen Schließkräfte unmittelbar auf die Massen des Ventilgliedes und der Feder, so daß eine Beschädigung der beteiligten Schließelemente nicht ausgeschlossen ist.

Aufgabe der Erfindung ist es, ein elektromagnetisch gesteuertes Wegesitzventil, insbesondere ein 2/2-Wegesitzventil mit kurzer Ansprechzeit anzugeben, das bei kleinem Bauraum als Einbauventil geeignet ist und auch bei Fertigungsungenauigkeiten des Sitzbereiches und auftretenden Massenkräften keine Beeinträchtigung der Gasdichtigkeit bis ≧ 80 bar oder der Funktionssicherheit noch der Lebensdauer aufweist.

Diese Aufgabe wird mit den im kennzeichnenden Teil des Anspruchs 1 angegebenen Merkmalen gelöst. Vorteilhafte Weiterbildungen sind Bestandteil von Unteransprüchen.

Im Unterschied zum Stand der Technik ist das Verschlußorgan als eigenständiges verschiebbares Bauelement ausgebildet, auf das zur Schaltung in Schließstellung die Druckfeder unmittelbar einwirkt. Zur Schaltung in Offenstellung kommt entgegen der Federkraft am Verschlußorgan ein Flächenelement des Ankers zur Anlage. Bei Entregung der Spule wird durch die Kraft der Druckfeder das Verschlußorgan in seine Schließlage bewegt. Durch das zur Anlage kommende Flächenelement des Ankers wird der Anker vom Verschlußorgan mitgenommen ohne am Schließvorgang aktiv teilzunehmen. Dadurch bleiben während des Schließvorgangs die dynamischen Schließkräfte auf die Massen von Verschlußorgan und Feder begrenzt, so daß eine Beschädigung der beteiligten Schließelemente so gut wie ausgeschlossen ist. Anders ausgedrückt,wird beim erfindungsgemäßen Magnetventil die Funktion, Magnetkraft zu erzeugen und zu leiten, von der auf den Sitz auftreffenden Masse des Ankers entkoppelt. Die Vernichtung der kinetischen Energie des Ankers bei der Bewegung in Schließstellung geschieht außerhalb des Ventilsitzes durch Auftreffen des Ankers auf das Ventilunterteil, während das Schließorgan sich auf den Ventilsitz aufsetzt.

Vorzugsweise ist das Verschließorgan als loses Plättchen ausgebildet, hergestellt aus einem Edelstein, insbesondere Saphir. Der Ventilsitz besteht aus einem Thermoplast, beispielsweise Arlon. Damit der Anker das Verschlußorgan in Richtung Offenhaltung mitnehmen kann, weist das dem Ventilsitz zugewandte Ende einen einwärts gerichteten Bund auf. Angepaßt dazu ist der Ventilsitz als halsförmige Verlängerung ausgebildet und wird vom einwärts gerichteten Bund des Ankers mit radialem Spiel umschlossen.
Zwischen der Feder und dem Plättchen wird vorzugsweise eine Kugel angeordnet, damit die Federkraft weitgehend zentral auf das Plättchen eingeleitet wird. Infolge der gewünschten geringen Baumaße, vorzugsweise ≧ 20 mm Durchmesser ist die erzeugbare Magnetkraft gering. Da die Magnetkraft aber umgekehrt proportional dem Quadrat des Arbeitsluftspaltes ist, wird zwischen dem Anker und dem Gehäuseabschlußteil eine Abstimmungsscheibe aus magnetisch leitendem Material mit geringer Remanenz angeordnet. Diese Anordnung hat den Zweck, daß durch den Spalt der Hub des Ankers festgelegt wird bei Optimierung der erzeugbaren Magnetkraft und dem Öffnungsweg des Verschlußorgans. Die Herstellung des Ventilkörpers aus einem Thermoplast hat den Vorteil, daß der Sitzbereich die Oberflächenqualität der Spritzgußform annimmt und die ansonsten übliche mechanische Bearbeitung entfällt. Der mit dem Ventilsitz zusammenwirkende künstliche Saphir weist eine optische Oberflächenqualität auf, so daß die geforderte Gasdichtheit gewährleistet ist. Die elastische Verformung des Ventilsitzes infolge der auf den Sitz wirkenden Federkraft bleibt beherrschbar ohne die Lebensdauer des Dichtsitzes zu beeinträchtigen. Die Herstellung des Ventilkörpers aus einem Thermoplast bietet außerdem die Möglichkeit, die Leitungsführung im Ventilkörper beim Spritzen mit einzubringen.

Die aus Ventilgehäuse und Magnetgehäuse bestehende Ventileinheit ist in bekannter Weise als Einbauventil ausgebildet und ist in der erfindungsgemäßen Ausbildung, insbesondere als Gasventil für elektrisch betätigte Zylinder, z. B. zur Verstellung von Arbeitsstühlen, insbesondere der elektrisch betätigten Verstellung der Stuhlhöhe und der Rückenlehne, geeignet. Weitere Anwendungsfälle sind Lenkradverstellungen, Krankenbetten sowie Verstellung von Kfz-Sitzen.

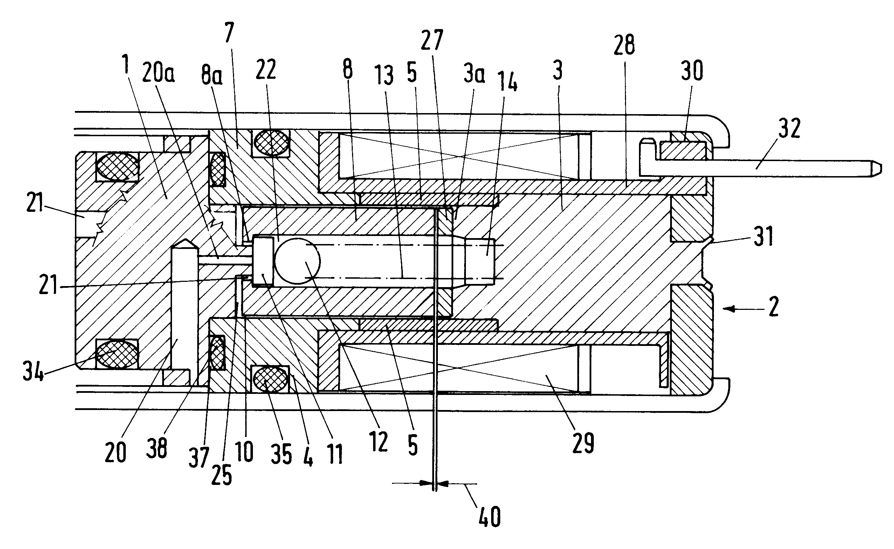

In der einzigen Figur wird in einem Längsschnitt das erfindungsgemäße magnetische Wegesitzventil näher erläutert.

In der Figur ist mit 1 das Ventilgehäuse, mit 2 das Magnetgehäuse bezeichnet. Das Magnetgehäuse 2 besteht aus einem Gehäuseabschlußteil 3, aus einem Anflanschteil 4 sowie aus einem aus nicht magnetischem Material bestehenden Rohrteil 5. Der Innendurchmesser des Anflanschteils 4 mit rohrförmigem Ansatz 7 weist den gleichen Innendurchmesser auf wie das Rohrteil 5. In diesen beiden Teilen ist der hülsenförmig ausgebildete Anker 8 angeordnet. Das Ventilgehäuse 1 weist eine halsförmige Verlängerung 10 auf, die den Ventilsitz bildet und mit einem als Plättchen 11 ausgebildeten Verschlußorgan zusammenarbeitet. Auf dem aus Saphir bestehenden Plättchen 11 liegt eine Kugel 12 auf, die das Plättchen 11 in Richtung des Ventilsitzes 10 zentral belastet. Mit ihrem anderen Ende stützt sich die Druckfeder 13 in einer Vertiefung 14 im Gehäuseabschlußteil 3 ab. Der hülsenförmige Anker 8 weist in seinem dem Ventilgehäuse 1 zugekehrten Ende einen einwärts gerichteten Bund 8a auf, der zur Mitnahme des Plättchens 11 dient, wenn sich der Anker in Folge magnetischer Erregung in Richtung des Gehäuseabschlußteiles 3 bewegt. Das Ventilgehäuse 1 weist einen Zuführungskanal 20 und einen Abführungskanal 21 aus, wobei der Zuführungskanal 20 als Sackbohrung ausgebildet ist, der mit einer in Richtung der halsförmigen Verlängerung 10 verlaufenden Längsbohrung 20a verbunden ist. Wie bereits schon erwähnt, können unter Verzicht einer mechanischen Herstellung der Bohrungen 20, 20a diese beim Spritzgießen mit eingebracht werden. Die Längsbohrung 20a mündet in den Ankerraum 22 und wird je nach Lage des Ankers 8 entweder von dem Verschlußorgan 11 freigegeben oder geschlossen gehalten. Bei Freigabe der Längsbohrung 20a strömt das Druckmedium in den Ankerraum 22 und von dort über den Ringraum 24 zwischen halsförmiger Verlängerung 10 und dem Bund 8a in den Ventilraum 25 und von dort weiter in den Abflußkanal 21. Der Öffnungshub 40 des Ankers 8 wird durch die aus einem magnetisch leitenden Material bestehenden Scheibe 27 festgelegt, die an der Stirnfläche 3a des Gehäuseabschlußteils 3 anliegt. Die notwendige Dicke der Scheibe 27 wird bei der Montage durch eine Kraftwegmessung des Magneten bestimmt. Dazu führt ein mit einem Kraft- und Wegaufnehmer versehener Stößel gegen den Anker 8 und registriert nur eine geringe Kraft, da nur die Masse des Ankers 8 bewegt werden muß. Bei Auftreffen des Ankers 8 mittels des Bundes 8a auf das Plättchen 11 ergibt sich aufgrund der jetzt wirksamen Federkraft ein Kraftsprung. Bei Anheben des Plättchens 11 wächst diese Kraft und wird unendlich beim Auftreffen des Ankers 8 am Gehäuseabschlußteil 3. Eine rechnerische Auswertung des Weges vom Auftreffen des Ankers 8 am Gehäuseabschlußteil 3. Eine rechnerische Auswertung des Weges vom Auftreffen des Ankers 8 auf das Plättchen 11 bis zum Anschlag (IST-Wert des Weges) ergibt die notwendige Dicke der Scheibe 27 und damit den gewünschten Hub 40. Beispielsweise soll dieser Hub 0,15 mm bei einer Toleranz von ± 0,05 mm betragen. Der Spulenkörper 28 mit Spule 29 erstreckt sich über den rohrförmigen Ansatz 7 des Anflanschteils 4, dem aus nichtmagnetischem Material bestehenden Rohrteil 5 sowie dem Gehäuseabschlußteil 3 und wird in axialer Richtung von einerm Abschlußdeckel 30 fixiert, der durch eine Bördelung 31 fest mit dem Gehäuseabschlußteil 3 verbunden ist.
Die Stromzuführung erfolgt über die Anschlußstifte 32. Die aus Ventilgehäuse 1 und Magnetgehäuse 2 bestehende Ventileinheit ist als Einbauventil ausgebildet und weist zu diesem Zweck Dichtungsringe 34, 35 auf, die in einer Stufenbohrung eines nicht näher dargestellten Gehäuses beispielsweise des Zylinderkopfes eines Arbeitszylinder die Abdichtung nach außen übernehmen. Ein in einer umlaufenden Nut 37 auf der Stirnseite des Anflanschteiles hier angeordneter Dichtring 38 gewährleistet eine dichte Verbindung zwischen dem Ventilgehäuse 1 und dem Anflanschteil 4 nach außen. Das Ventilgehäuse 1 besteht aus einem thermoplastischen Material, so daß ein dichter Sitz des Saphirplättchens 11 beim Aufsetzen auf den Ventilsitz 10 gewährleistet ist.

Beim Bestromen der Spule 29 bewegt sich der Anker 8 gegen die Kraft der Feder 13 in Richtung des Deckels 30 und hebt durch den einwärts gerichteten Bund 8a das Plättchen 11 von seinem Ventilsitz 10 ab, so daß Zu 20- und Abführungskanal 21 miteinander verbunden sind. Bei Entregung der Spule 29 wird durch die Kraft der Feder 13 das Plättchen 11 über die Kugel 12 zurück in seine Schließstellung bewegt. Der Anker 8 wird über dessen einwärts gerichteten Bund 8a vom Plättchen 11 mitgenommen, ohne am Schließvorgang aktiv teilzunehmen. Dadurch bleiben während des Schließvorgangs die dynamischen Schließkräfte auf die Massen von Plättchen 11, Kugel 12 und Feder 13 begrenzt, die eine Beschädigung der beteiligten Schließelemente so gut wie nicht bewirken können. Der Anker 8 bewegt sich nach dem Aufsetzen des Plättchens 11 auf seinem Ventilsitz 10 weiter frei in Richtung Ventilgehäuse 1, bis er auf der dem Dichtsitz zugewandten Stirnseite des Ventilgehäuses 1 zur Anlage kommt.

## Patentansprüche

1. Elektromagnetisch gesteuertes Wegesitzventil bestehend aus einem Ventilgehäuse, das Anschlüsse für das Druckmittel und einen Ventilsitz aufweist und ein mit dem Ventilgehäuse verbundenes Magnetgehäuse mit Spulenwicklung und einem axial verschiebbaren hülsenartig ausgebildeten Anker sowie einem mit dem Ventilsitz zusammenwirkenden Verschließorgan, wobei das dem Ventilsitz zugewandte Ende des Ankers einen einwärts gerichteten Bund zur Mitnahme des Verschließorganes aufweist und das Verschließorgan durch die Kraft einer Druckfeder in Schließstellung und durch die auf den Anker wirkende Magnetkraft in Offenstellung gehalten wird,
dadurch gekennzeichnet,
daß das Verschließorgan (11) als loses Plättchen ausgebildet ist, das von einer mit der Feder (13) zusammenwirkenden Kugel (12) in Schließrichtung zentral belastbar ist und auf das zur Schaltung in Schließstellung die Druckfeder (13) unmittelbar einwirkt, wobei beim Schließvorgang der Anker (8) durch das Verschlußorgan (11) mitgenommen wird und in der Schließstellung des Verschlußorganes (11) der einwärts gerichtete Bund (8a) des Ankers (8) in Öffnungsrichtung Spiel zum Verschließorgan (11) aufweist.

2. Elektromagnetisch gesteuertes Wegesitzventil nach Anspruch 1,
dadurch gekennzeichnet,
daß die Druckfeder (13) in der Durchgangsbohrung (22) des Ankers (8) angeordnet ist.

3. Elektromagnetisch gesteuertes Wegesitzventil nach den Ansprüchen 1 und 2,
dadurch gekennzeichnet,
daß eine Scheibe (27) aus einem magnetisch leitenden Material zwischen der dem Ventilsitz (10) abgewandten Stirnfläche des Ankers (8) und einem Gehäuseabschlußteil (3) so angeordnet ist, daß in Schließstellung zwischen Anker (8) und Scheibe (27) ein Spalt (40) verbleibt, wobei durch diesen Spalt (40) der Hub des Ankers (8) festgelegt wird.

4. Elektromagnetisch gesteuertes Wegesitzventil nach einem der Ansprüche 1 bis 3,
dadurch gekennzeichnet,
daß das Verschließorgan (11) aus einem Edelstein und der Ventilsitz (10) aus einem thermoplastischen Kunststoff besteht.
